# EUROPÄISCHE PATENTSCHRIFT

(11) **EP 1 888 388 B1**
(45) Veröffentlichungstag und Bekanntmachung des Hinweises auf die Patenterteilung: **13.01.2016**
(21) Anmeldenummer: 06753762.1
(22) Anmeldetag: 22.05.2006
(51) Int. Cl.: B60T 13/68, B60T 17/08, B60T 17/22, B60T 7/10

(54) **VERFAHREN ZUM AUTOMATISCHEN ABBREMSEN EINES MIT EINER ELEKTRONISCH GEREGELTEN BREMSEINRICHTUNG AUSGESTATTETEN FAHRZEUGS**
METHOD FOR AUTOMATICALLY BREAKING A VEHICLE EQUIPPED WITH AN ELECTRONICALLY CONTROLLED BRAKE SYSTEM
PROCEDE DE FREINAGE AUTOMATIQUE D'UN VEHICULE EQUIPE D'UN DISPOSITIF DE FREINAGE A REGULATION ELECTRONIQUE

(30) Priorität: 23.05.2005 DE 102005023665
(43) Veröffentlichungstag der Anmeldung: 20.02.2008
(73) Patentinhaber: KNORR-BREMSE Systeme für Nutzfahrzeuge GmbH, 80809 München (DE)
(72) Erfinder: HERGES, Michael, H-1112 Budapest (HU)
(74) Vertreter: Schönmann, Kurt
(86) Internationale Anmeldenummer: PCT/EP2006/004820
(87) Internationale Veröffentlichungsnummer: WO 2006/125581

(56) Entgegenhaltungen:
- DE-A1- 2 820 921
- DE-A1- 10 104 498
- DE-A1- 10 213 346
- DE-A1- 10 336 611
- DE-A1- 19 831 541
- DE-A1- 19 849 799

## Beschreibung

Die Erfindung geht aus von einem Verfahren zum automatischen, ohne aktive Bremsbetätigung des Fahrers erfolgenden Abbremsen eines mit einer elektronisch geregelten Bremseinrichtung ausgestatteten Fahrzeugs, gemäß dem Oberbegriff von Patentanspruch 1.

In Verbindung mit elektronischen Bremssystemen (EBS) sind automatische Bremsverfahren wie beispielsweise Hillholding, Brake-Hold-and-Release-Aid, automatische Anfahrhilfen oder Wegrollsperren bekannt, die ein Fahrzeug nach dem Anhalten und ohne dass der Fahrer das Bremspedal betätigt automatisch mit der Betriebsbremse im Stillstand halten und diese automatisch erst dann wieder lösen, wenn der Fahrer durch Betätigen einer Bedieneinrichtung wie beispielsweise dem Gas- oder Kupplungspedal oder auch durch Einlegen eines Ganges wieder anfährt. Das Gebremsthalten erfolgt dabei meist durch die elektrisch angesteuerte, pneumatische Betriebsbremse. Diese benötigt jedoch ständig Energie in Form von Druckluft und elektrischer Energie und neigt deshalb bei andauernder Betätigung ohne Betrieb des Motors nach einer gewissen Zeit zum Lösen der Bremse oder zumindest zum Nachlassen der Bremskraft. Alternativ kann die Feststellbremse angesteuert werden, um das Fahrzeug im gebremsten Zustand zu halten, wenn sie wie z.B. in DE 3 521 486 vorgeschlagen, elektrisch angesteuert ist. Bei Nutzfahrzeugen wird die Feststellbremse durch eine Federspeicherbremse mit einer gegen einen druckluftbeaufschlagbaren Kolben wirkenden Speicherfeder gebildet, wobei die Federspeicherbremse durch Belüften gelöst und durch Entlüften zugespannt wird. Nachteilig ist hierbei jedoch, dass die Feststellbremse eine geringe Dynamik aufweist und relativ viel Luft benötigt.

Ein weiteres Verfahren ist aus der DE 102 38 870 A1 bekannt. Hierbei wird mittels der Betriebsbremse ein das Fahrzeug im Stillstand haltendes Bremsmoment erzeugt und nach Ablauf eines Haltezeitintervalls automatisch die Feststellbremse betätigt und die Betriebsbremse gelöst. Dies bedeutet, dass die Feststellbremse immer dann zugespannt wird, wenn der Stillstand länger als die vorgegebene Haltezeit dauert, was beispielsweise dann nachteilig ist, wenn die Haltezeit kürzer als die Stillstandszeit ist, während welcher das Fahrzeug etwa bei Ampelstopps, an beschrankten Bahnübergängen oder bei Einfahrt in eine vorfahrtberechtigte Strasse mit hohem Verkehrsaufkommen steht. Denn dann wird die eine vergleichsweise geringe Dynamik aufweisende Feststellbremse zugespannt und muss zum Losfahren wieder gelöst werden, was eine gewisse Zeit in Anspruch nimmt und viel Druckluft verbraucht. Um die Reaktionszeit möglichst kurz zu halten, müssten deshalb relativ große Belüftungsquerschnitte und eine sehr leistungsfähige Druckluftversorgung vorgesehen werden. Gemäß der oben genannten Schrift soll die Summe der Bremsmomente von Feststellbremse und Betriebsbremse während des Übergangs von der einen auf die andere Bremse konstant gehalten werden. Das Umsteuern erfolgt dabei rampenartig. Da die Bremswirkung der Speicherfeder der Feststellbremse nicht direkt proportional zum Federspeicherdruck ist, ist die Bremswirkung der Feststellbremse nur sehr ungenau über den Druck bestimmbar. Es ist daher bei diesem Verfahren möglich, dass der Betriebsbremsdruck bereits abgebaut wird bevor die Feststellbremse genügend Bremskraft aufgebaut hat, was zu einem ungewollten Wegrollen des Fahrzeugs führen kann. Ferner bedingt das rampenartige Absenken bzw. Steigern der Bremskraft eine stufbare Ansteuerung der Feststellbremse, was relativ aufwändig zu realisieren ist. Bei einem Verfahren gemäß der DE 101 04 498 A1 erfolgt nach Aktivierung einer Hill-Holder-Funktion durch Erhöhung der Bremspedalkraft durch den Fahrer und nach Abschalten der Zündung ein automatischer Übergang von der Betriebsbremse auf die Feststellbremse. Nachteilig bei den genannten Verfahren ist jedoch, dass in beiden Fällen der Fahrer aktive Handlungen durchführen muss (Aktivierung der Roll-Bremsfunktion bzw. Erhöhung der Pedalkraft), welche der Fahrer aber unterlassen bzw. vergessen kann und es dadurch nicht zum gewünschten automatischen Übergang von der Betriebsbremse zur Feststellbremse kommt.

Aus der DE 198 49 799 A1 ist ein Verfahren bekannt, bei welchem nach dem Erfüllen einer Langzeitparkbedingung, welche durch eine unterbrochene Zündung als erfüllt gilt, automatisch die Feststellbremse zugespannt und die Betriebsbremse gelöst wird. Aus der gattungsbildenden DE 103 36 611 A1 ist ein Verfahren bekannt, bei welchem nach vorangehender manueller Aktivierung einer Rollbrems-Funktion bei Erkennen eines Fahrzeugstillstands der Bremsdruck der Betriebsbremse zunächst auf dem aktuell vorliegenden Niveau gehalten wird. Wenn die Spannungsversorgung vom Fahrer per Zündungsschalter ausgeschaltet wird oder bei einem Defekt der Betriebsbremse wird die Feststellbremse automatisch aktiviert.

Der Erfindung liegt demgegenüber die Aufgabe zugrunde, ein Verfahren der oben erwähnten Art derart weiter zu bilden, dass im Rahmen des automatischen Übergangs von der Betriebsbremse auf die Feststellbremse die Sicherheit gegen ein Wegrollen des Fahrzeugs erhöht wird.

Erfindungsgemäß wird diese Aufgabe durch die Merkmale des Patentanspruchs 1 gelöst.

### Offenbarung der Erfindung

Die Erfindung basiert darauf, dass bei einem durch die Betriebsbremse im Stillstand gehaltenen Fahrzeug primär das Abschalten des Fahrzeugantriebs oder Fahrzeugmotors ein Auslösekriterium darstellen kann, in Abhängigkeit dessen das selbsttätige Lösen der Betriebsbremse und das Zuspannen der Feststellbremse erfolgt, da der Motor im Betrieb im Normalfall sowohl genügend Druckluft als auch genügend elektrische Energie produziert, um die Betriebsbremse sicher betreiben zu können. Dabei wird das Zuspannen der Feststellbremse auf das Auslösekriterium hin ohne Verzögerung, d.h. ohne die in der DE 102 38 870 A1 beschriebene Haltezeit eingeleitet. Dies hat den Vorteil, dass im Betrieb des Fahrzeugs, d.h. bei laufendem Motor, die zum Lösen der Bremse benötigte Zeitdauer relativ kurz ist, da die Betriebsbremse eine vergleichbar hohe Dynamik aufweist. Ein Einlegen der Feststellbremse erfolgt folglich erst dann, wenn mit einem längeren Stillstand des Fahrzeugs, also nach dem Abschalten des Fahrzeugantriebs zu rechnen ist.

Weiterhin basiert der Erfindung darauf, dass ein Auslösekriterium für das dann folgende automatische Lösen der Betriebsbremse und Zuspannen der Feststellbremse auch darstellen kann, wenn der Betriebsbremsdruck auf einen kritischen Bremsdruckgrenzwert absinkt. Darüber hinaus kann als Auslösekriterium für das automatische Lösen der Betriebsbremse und Zuspannen der Feststellbremse auch der Fall herangezogen werden, in welchem die Betriebsbremse z.B. aufgrund eines Defekts nicht funktionsfähig ist. In beiden Fällen wäre die Betriebsbremse nicht in der Lage, das Fahrzeug am Wegrollen zu hindern. Die Größe dieses kritischen Bremsdruckgrenzwerts passt der Fachmann an die jeweiligen Gegebenheiten an, z.B. an den nominalen Vorratsdruck, an die Bremszylindervolumina etc..

Auch der Fall, dass die Bordspannung des Fahrzeugs auf einen kritischen Spannungsgrenzwert absinkt, kann ein Auslösekriterium für das automatische Lösen der Betriebsbremse und Zuspannen der Feststellbremse sein. Denn bei zu geringer Bordspannung ist kein Lösen oder Zuspannen der elektrisch gesteuerten Betriebsbremse mehr möglich, so dass einem Totalausfall der Fahrzeugbremsen vorgebeugt wird, indem mit noch ausreichender Restspannung im Steuergerät entsprechende Steuerbefehle erzeugt werden, um das automatische Lösen der Betriebsbremse und das Zuspannen der Feststellbremse zu veranlassen und somit ein unbeabsichtigtes Wegrollen des Fahrzeugs zu verhindern.

Weiterhin kann der Fall, dass die Feststellbremse aufgrund eines Defekts nicht mehr manuell zugespannt werden kann, ein Auslösekriterium für das automatische Lösen der Betriebsbremse und Zuspannen der Feststellbremse darstellen. Das Detektieren eines Defekts in der Bedieneinrichtung der Feststellbremse und/oder in deren Signalweiterleitung kann durch geeignete Sensoren erfolgen.

Nicht zuletzt kann eine Betätigung eines Bedienelements zum Aktivieren der Feststellbremse ein Auslösekriterium für das automatische Lösen der Betriebsbremse und Zuspannen der Feststellbremse darstellen, wobei im Gegensatz zur Lehre der DE 102 38 870 A1 keine Haltezeit abgewartet werden muss, bis das Zuspannen der Feststellbremse eingeleitet wird. Dies ist insbesondere in Situationen von Vorteil, wenn das Fahrzeug trotz zugespannter und u.U. defekter Betriebsbremse ins Rollen kommt und demzufolge die Feststellbremse sehr zügig ansprechen muss.

Die genannten Verfahrensschritte werden vorzugsweise durch eine gemeinsame elektronische Steuerung des Betriebs- und Feststellbremssystems veranlasst und gesteuert oder durch eine vom Betriebsbremssystem getrennte elektronische Steuerung des Feststellbremssystems in Kommunikation mit der elektronischen Steuerung des EBS-Bremssystems.

Erfindungsgemäß wird ausgehend von dem Zustand, in welchem bei abgeschaltetem Fahrzeugantrieb die Feststellbremse zugespannt und die Betriebsbremse gelöst ist, bei einem Neustart des Fahrzeugantriebs die Betriebsbremse automatisch zugespannt und die Feststellbremse automatisch gelöst. Folglich werden die Verfahrenschritte, welche zu einem selbsttätigen Abbremsen und Stilllegen des Fahrzeugs geführt haben, bei einem Neustart in umgekehrter Reihenfolge durchlaufen, wobei die zugespannte Betriebsbremse das Fahrzeug am Wegrollen hindert. In diesem Fall wird das Lösen der Feststellbremse vorzugsweise erst dann eingeleitet wird, wenn die Betriebsbremse eine gewisse Mindestbremswirkung aufbringt. Dadurch wird die Sicherheit dagegen erhöht, dass das Fahrzeug während des Übergangs von der Feststellbremse zur Betriebsbremse wegrollt. Beim Anfahren, d.h. wenn ein genügend großes Antriebsdrehmoment im Antriebsstrang vorhanden ist, wird dann schließlich die Betriebsbremse selbsttätig gelöst.

In analoger Weise wird bei einem Übergang von der Betriebsbremse zur Feststellbremse nach Abschalten des Fahrzeugantriebs vorzugsweise erst zu dem Zeitpunkt, an dem die Bremswirkung der Feststellbremse mit genügend hoher Sicherheit einen bestimmten Mindestwert erreicht hat, die Bremswirkung der Betriebsbremse im dem Maße zurückgefahren, wie die Bremswirkung der Feststellbremse zunimmt. Wenn dann die Feststellbremse ihre maximale Bremswirkung oder Bremskraft erreicht hat, wird die Betriebsbremse ausgeschaltet. Schließlich werden nach dem Zuspannen der Feststellbremse die Betriebsbremssteuerung und die Feststellbremssteuerung abgeschaltet.

Durch die in den Unteransprüchen aufgeführten Maßnahmen sind vorteilhafte Weiterbildungen und Verbesserungen der in den unabhängigen Ansprüchen angegebenen Erfindung möglich.

Das beim Abschalten bzw. bei einem Neustart des Fahrzeugantriebs gegenläufige Lösen und Zuspannen der Betriebsbremse und der Feststellbremse erfolgt vorzugsweise kennliniengesteuert. Dabei wird beispielsweise die von der Speicherfeder der Feststellbremse erzeugte Bremswirkung anhand des momentan sich einstellenden Drucks, der vergangenen Zeit oder anderer gemessener Größen über einen Schätzalgorithmus ermittelt. Dieser Schätzalgorithmus kann ein Verzögerungsglied beinhalten, da zwischen dem Signal für den Steller und der Reaktion im Bremszylinder in der Regel eine gewisse Verzögerung vorhanden ist. Folglich ist in vorteilhafter Weise keine stufenweise Drucksteuerung oder - regelung des Feststellbremsdrucks nötig.

Für den Fall, dass die Bremswirkung der Feststellbremse nicht ausreicht, um das Fahrzeug am Losrollen zu hindern, wird beispielsweise die Betriebsbremse erneut zugespannt und ein akustisches und/oder optisches Warnsignal erzeugt. Gemäß einer Abwandelung dieser Maßnahmen kann bei der vor dem Stillstand des Fahrzeugs stattfindenden Bremsung mit der Betriebsbremse eine zum Gebremsthalten des Fahrzeugs notwendige Betriebsbremskraft errechnet und mit der von der Feststellbremse maximal erzeugbaren Feststellbremskraft verglichen werden, wobei für den Fall, dass die Betriebsbremskraft größer als die Feststellbremskraft ist, ein akustisches und/oder optisches Warnsignal erzeugt wird. Denn in diesem Fall reicht die von der Feststellbremse maximal erzeugbare Feststellbremskraft nicht aus, um das Fahrzeug im Stillstand zu halten. Alternativ kann auch die vor dem Stillstand des Fahrzeugs stattfindende Bremsung mit der Betriebsbremse mit einer Betriebsbremskraft durchgeführt werden, welche höchstens so groß wie die von der Feststellbremse maximal erzeugbare Feststellbremskraft. Dadurch kann der Fahrer erkennen, ob die von der Feststellbremse maximal erzeugbare Feststellbremskraft ausreichend ist, das Fahrzeug am Wegrollen zu hindern.

Besonders bevorzugt wird nach dem Lösen der Betriebsbremse und dem Zuspannen der Feststellbremse bei stehendem Motor und ausgeschaltetem Fahrschalter zumindest ein Teil der Bremssteuerung des EBS-Bremssystems abgeschaltet. Dies bringt Vorteile durch Energieersparnis, um ein Entleeren der Fahrzeugbatterie zu verhindern.

Gemäß einer Weiterbildung wird durch eine Betätigung des Bedienelements der Feststellbremse die Betriebsbremse zugespannt, um den Zustand herzustellen, in welchem sich das Fahrzeug im Stillstand befindet, wobei das Lösen der Betriebsbremse und das Zuspannen der Feststellbremse nach dem Abschalten des Fahrzeugantriebs erfolgt. Dies hat den Vorteil, dass auch gesteuert vom Bedienelement der Feststellbremse aus mit dem Elektronischen Bremssystem (EBS) gut dosierbar während der Fahrt gebremst werden kann, obwohl der Aktuator zur Ansteuerung der Feststellbremse nur eine An-Aus-Funktionalität besitzt. Wenn eine Bremsung mit dem Elektronischen Bremssystem (EBS) nicht möglich ist, kann die Feststellbremse sofort aktiviert werden.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: einen zeitlichen Bremsdruckverlauf eines erfindungsgemäßen Bremsvorgangs gemäß einer bevorzugten Ausführungsform;
- Fig.2: einen zeitlichen Verlauf der Abbremsung des erfindungsgemäßen Bremsvorgangs von Fig.1;
- Fig.3: einen zeitlichen Bremsdruckverlauf nach dem Fahrzeugstart;
- Fig.4: einen zeitlichen Verlauf der Abbremsung nach dem Fahrzeugstart.

### Beschreibung des Ausführungsbeispiels

Die Erfindung bezieht sich auf ein Verfahren zum automatischen, ohne aktive Bremsbetätigung des Fahrers erfolgenden Abbremsen eines mit einer elektronisch geregelten Bremseinrichtung (EBS) ausgestatteten Nutzfahrzeugs gemäß einer bevorzugten Ausführungsform der Erfindung. Das EBS-Bremssystem umfasst eine elektrisch ansteuerbare, mit einem Betriebsbremsdruck p_{B} beaufschlagbare Betriebsbremse und eine elektrisch ansteuerbare, mit einem Feststellbremsdruck beaufschlagbare Feststellbremse in Form einer Federspeicherbremse mit einer gegen einen druckluftbeaufschlagbaren Kolben wirkenden Speicherfeder, welche durch Belüften gelöst und durch Entlüften zugespannt wird. Die Betriebsbremse ist eine aktive pneumatische Bremse, d.h. sie wird durch Belüften eines Betriebsbremszylinders zugespannt und durch Entlüften gelöst. Ein solches elektronisch geregeltes Bremssystem (EBS) für Nutzfahrzeuge ist an sich bekannt. Es enthält eine elektronische Steuereinheit, welche in mehrere dezentrale Steuereinheiten unterteilt sein kann und wie im vorliegenden Fall beispielsweise ein Betriebsbremssteuergerät und ein Feststellbremssteuergerät beinhaltet, welche die Bremsvorgänge der Betriebsbremse und der Feststellbremse steuern.

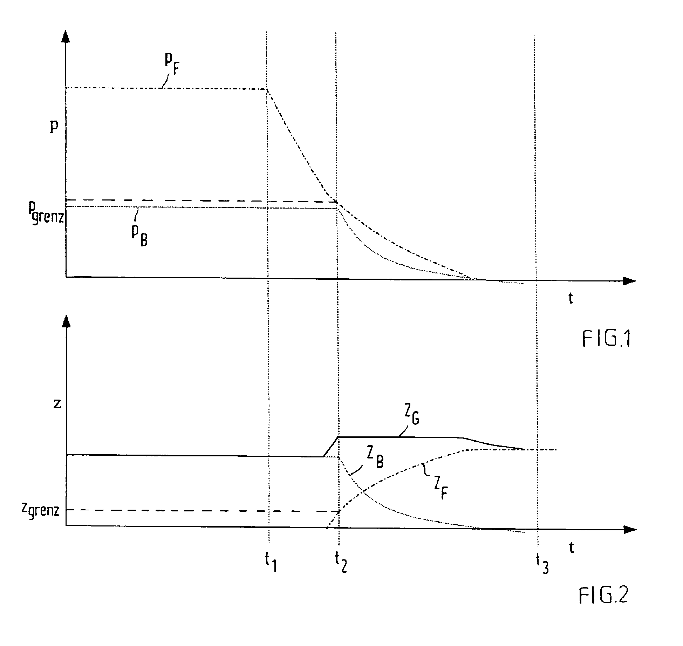

Fig. 1 zeigt den zeitlichen Verlauf eines erfindungsgemäßen Bremsvorgangs. Hierbei ist der Verlauf des Federspeicherbremsdrucks p_{F} der Feststellbremse und des Betriebsbremsdrucks p_{B} der Betriebsbremse über der Zeit t aufgetragen. In Fig. 2 ist demgegenüber die Abbremsung Z über der Zeit t dargestellt, welche als Verhältnis zwischen der Bremskraft zur Normalkraft definiert ist. Mit Z_{B} ist dabei die der Betriebsbremse zugeordnete Abbremsung, mit Z_{F} die der Feststellbremse zugeordnete Abbremsung und mit Z_{G} die Gesamtabbremsung als Summe von Z_{B} und Z_{F} bezeichnet.

Die beiden Diagramme in Fig. 1 und Fig. 2 gehen zum Zeitpunkt t = 0 von einem Zustand aus, in welchem das Nutzfahrzeug durch Zuspannen der Betriebsbremse von der Fahrt in den Stillstand gebracht wurde und folglich im Betriebsbremszylinder der Druck p_{B} ansteht. Die als passive Federspeicherbremse ausgebildete Feststellbremse ist hingegen durch den Federspeicherdruck p_{F} gelöst.

Ausgehend von diesem Zustand soll ein Lösen der Betriebsbremse und ein Zuspannen der Feststellbremse abhängig von wenigsten einem Auslösekriterium erfolgen. Ein Auslösekriterium besteht beispielsweise in dem Abschalten des Fahrzeugantriebs des durch die Betriebsbremse im Stillstand gehaltenen Nutzfahrzeugs zu einem Zeitpunkt t₁. Zu diesem Zeitpunkt wird ohne Verzögerung der Federspeicherbremszylinder entlüftet, woraufhin der Federspeicherbremsdruck p_{F} absinkt. Durch den sinkenden Druck p_{F} wird jedoch nicht sofort eine Feststellbremskraft erzeugt, da der Federspeicherkolben zunächst einen gewissen Leerweg zurücklegen muss. Aus diesem Grunde bleibt die Betriebsbremse weiterhin zugespannt bzw. der Betriebsbremsdruck p_{B} solange auf seinem Ausgangsniveau, bis der Federspeicherbremsdruck p_{F} auf einen unteren Grenzwert p_{grenz} abgefallen ist, welcher ausreicht, um eine Mindestfeststellbremskraft zu erzeugen. Der Wert dieses unteren Grenzdrucks p_{grenz} kann vom Fachmann den vorliegenden Gegebenheiten entsprechend angepasst werden. Erst wenn dieser untere Grenzdruck p_{grenz} zu einem Zeitpunkt t₂ erreicht ist, wird das Lösen der Betriebsbremse durch Absenken des Betriebsbremsdrucks p_{B} eingeleitet. Der Betriebsbremsdruck p_{B} wird folglich nicht früher abgebaut, als der Federspeicherbremsdruck p_{F} den unteren Grenzdruck p_{grenz} erreicht hat. Wenn zum Zeitpunkt t₃ dann sowohl der Betriebsbremszylinder als auch der Feststellbremszylinder entlüftet sind, also wenn die Betriebsbremse vollständig gelöst und die Federspeicherbremse vollständig zugespannt ist, wird das Betriebsbremssteuergerät und das Feststellbremssteuergerät abgeschaltet.

Das gegenläufige Lösen und Zuspannen der Betriebsbremse und der Feststellbremse erfolgt vorzugsweise kennliniengesteuert. Dabei wird beispielsweise die von der Speicherfeder der Feststellbremse erzeugte Bremswirkung anhand des momentan sich einstellenden Drucks, der vergangenen Zeit und/oder anderer gemessener Größen über einen Schätzalgorithmus ermittelt. Dieser Schätzalgorithmus kann ein Verzögerungsglied beinhalten, da zwischen dem Signal für den Steiler und der Reaktion im jeweiligen Bremszylinder in der Regel eine gewisse Verzögerung vorhanden ist. Erst wenn die Bremswirkung oder Abbremsung Z der Feststellbremse mit genügend hoher Sicherheit einen bestimmten Grenzwert Z_{grenz} erreicht hat, wird die Bremswirkung Z_{B} der Betriebsbremse in dem Maße zurückgefahren, wie die Bremswirkung Z_{F} der Feststellbremse zunimmt, nämlich ab dem Zeitpunkt t₂ wie aus Fig. 2 hervorgeht, der den Beginn des Abbaus des Betriebsbremsdrucks p_{B} charakterisiert. Ab dem Zeitpunkt t₂ ist folglich die Gesamtabbremsung Z_{G} größer als vorher, was die Sicherheit gegen ein Wegrollen des Nutzfahrzeugs erhöht. Wenn dann die Festestellbremse ihre maximale Bremswirkung oder Abbremsung erreicht hat, wird die Betriebsbremse ausgeschaltet.

Während üblicherweise der Zustand des durch die Betriebsbremse eingebremsten Fahrzeugs durch eine Betätigung der Betriebsbremse hervorgerufen wird, kann gemäß einer Weiterbildung der Erfindung auch durch eine Betätigung des Bedienelements der Feststellbremse vor dem Zeitpunkt t = 0 die Betriebsbremse zugespannt werden, um diesen Zustand herzustellen. In diesem Fall ist die Bremseinrichtung derart ausgebildet, dass die Betriebsbremse durch das Bedienelement der Feststellbremse aktiviert bzw. zugespannt werden kann. Dann erfolgt das Lösen der Betriebsbremse und das Zuspannen der Feststellbremse wie oben beschrieben gemäß Fig.1 und Fig.2, wobei das Auslösekriterium das Abschalten des Fahrzeugantriebs darstellt.

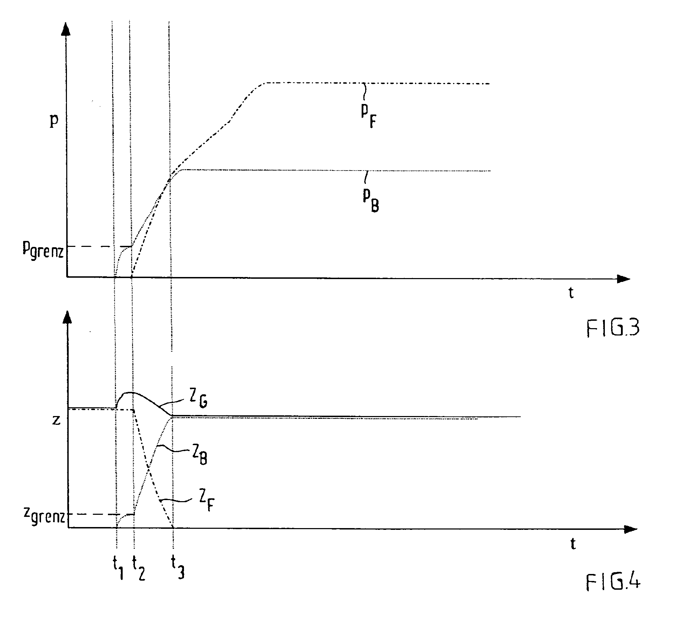

Ausgehend von dem Zustand zum Zeitpunkt t = 0, in welchem bei abgeschalteten Fahrzeugantrieb und abgeschalteter Bremssteuerung die Feststellbremse zugespannt und die Betriebsbremse gelöst ist, wird bei einem Neustart des Fahrzeugantriebs gleichzeitig die Bremssteuerung aktiviert. Diese löst in selbsttätiger Weise die Feststellbremse und spannt die Betriebsbremse zu. Folglich werden die Verfahrensschritte, welche zu einem selbsttätigen Abbremsen und Stilllegen des Fahrzeugs geführt haben, bei einem Neustart in umgekehrter Reihenfolge durchlaufen, wobei dann die zugespannte Betriebsbremse das Fahrzeug am Wegrollen hindert. Beim Anfahren, d.h. wenn ein Antriebsdrehmoment im Antriebsstrang vorhanden ist, wird dann die Betriebsbremse selbsttätig gelöst. Dieser Sachverhalt ist in Fig. 3 und in Fig. 4 dargestellt.

Fig. 3 zeigt den Druckverlauf über der Zeit für den Federspeicherbremsdruck p_{F} und den Betriebsbremsdruck p_{B}, wenn der Fahrzeugantrieb zum Zeitpunkt t₁ gestartet wird. Zu diesem Zeitpunkt wird im Betriebsbremszylinder Betriebsbremsdruck p_{B} aufgebaut, jedoch erst wenn der Betriebsbremsdruck p_{B} einen gewissen Mindestbetriebsbremsdruck p_{grenz} zu einem Zeitpunkt t₂ erreicht hat, wird mit dem Aufbau des Federspeicherbremsdrucks p_{F} begonnnen, um die Feststellbremse zu lösen. Folglich wird das Lösen der Feststellbremse erst zum Zeitpunkt t₂ eingeleitet, wenn die Betriebsbremse bereits eine gewisse Mindestbremswirkung oder Mindestabbremsung Z_{grenz} aufbringt (vgl. Fig. 4). Zu einem Zeitpunkt t₃ ist dann die Feststellbremse gelöst, obwohl der Federspeicherbremsdruck p_{F} weiter gesteigert werden kann, um den Leerweg bis zum vollständigen Spannen der Speicherfeder zurückzulegen, wie in Fig. 3 anschaulich dargestellt ist.

Bezogen auf die Abbremsung Z oder die Bremswirkung von Fig. 4 bedeutet dies, dass im Laufe eines Zeitbereichs, welcher sich vom Antriebsstart zum Zeitpunkt t₁ bis zum Beginn des Aufbaus des Feststellbremsdrucks p_{F} zum Zeitpunkt t₂ erstreckt eine Gesamtabbremsung Z_{G} erreicht wird, welche größer ist als die Abbremsung Z_{F} der Feststellbremse, welche vor dem Neustart der Antriebs herrscht. Das gleiche gilt für den Bremsvorgang gemäß Fig. 2, wo die Gesamtabbremsung Z_{G} zumindest in dem Zeitintervall zwischen t₂ und t₃ größer ist als die Abbremsung Z_{B} der Betriebsbremse zum Zeitpunkt t₁, an welchem der Fahrzeugantrieb ausgeschaltet wird. Das Auslösekriterium zum Übergang von der Betriebsbremse auf die Feststellbremse und umgekehrt ist nicht auf das Ausschalten oder Einschalten des Fahrzeugantriebs beschränkt. Vielmehr kann das Auslösekriterium wenigstens eines der folgenden Kriterien sein:
- Der Betriebsbremsdruck sinkt auf einen kritischen Bremsdruckgrenzwert ab;
- Die Betriebsbremse ist nicht funktionsfähig;
- Die Bordspannung der Fahrzeugs sinkt auf einen kritischen Spannungsgrenzwert ab;
- Die Feststellbremse kann aufgrund eines Defekts nicht manuell zugespannt werden;
- Die Betätigung eines Bedienelements zum Zuspannen der Feststellbremse.

## Patentansprüche

1. Verfahren zum automatischen, ohne aktive Bremsbetätigung des Fahrers erfolgenden Abbremsen eines mit einer elektronisch geregelten Bremseinrichtung ausgestatteten Fahrzeugs, welche eine elektrisch ansteuerbare, mit einem Betriebsbremsdruck (p_{B}) beaufschlagbare Betriebsbremse und eine elektrisch ansteuerbare, mit einem Feststellbremsdruck (p_{F}) beaufschlagbare Feststellbremse umfasst, wobei ausgehend von einem Zustand, in welchem sich das Fahrzeug durch Zuspannen der Betriebsbremse im Stillstand befindet ein Lösen der Betriebsbremse und ein Zuspannen der Feststellbremse abhängig von einem Auslösekriterium erfolgt, wobei ein Zuspannen der Feststellbremse auf das Auslösekriterium hin ohne Verzögerung eingeleitet wird und das Auslösekriterium wenigstens eines der folgenden Kriterien ist:
a) Der Fahrzeugantrieb wird abgeschaltet;
b) der Betriebsbremsdruck (p_{B}) sinkt auf einen kritischen Bremsdruckgrenzwert ab;
c) die Betriebsbremse ist nicht funktionsfähig;
d) die Bordspannung des Fahrzeugs sinkt auf einen kritischen Spannungsgrenzwert ab;
e) die Feststellbremse kann aufgrund eines Defekts nicht manuell zugespannt werden;
f) die Betätigung eines Bedienelements zum Zuspannen der Feststellbremse,
**dadurch gekennzeichnet, dass**
- die Betriebsbremse weiterhin solange zugespannt oder der Betriebsbremsdruck (p_{B}) solange auf seinem Ausgangsniveau bleibt, bis der Federspeicherbremsdruck (p_{F}) auf einen unteren Grenzwert (p_{grenz}) abgefallen ist und das Lösen der Betriebsbremse durch Absenken des Betriebsbremsdrucks (p_{B}) erst dann eingeleitet wird, wenn dieser untere Grenzdruck (p_{grenz}) durch den Federspeicherbremsdruck (p_{F}) erreicht ist und die Feststellbremse eine gewisse Mindestbremswirkung (z_{grenz}) aufbringt, und dass
- ausgehend von einem Zustand, in welchem bei abgeschaltetem Fahrzeugantrieb die Feststellbremse zugespannt und die Betriebsbremse gelöst ist, bei einem Start des Fahrzeugantriebs die Betriebsbremse automatisch zugespannt und die Feststellbremse automatisch gelöst wird, wobei das Lösen der Feststellbremse und ein Abbau des Federspeicherbremsdrucks (p_{F}) erst dann eingeleitet wird, wenn der Betriebsbremsdruck (p_{B}) einen Mindestbetriebsbremsdruck (p_{grenz}) erreicht hat und die Betriebsbremse eine gewisse Mindestbremswirkung (z_{grenz}) aufbringt.

2. Verfahren nach Anspruch 1, **dadurch gekennzeichnet, dass** das gegenläufige Lösen und Zuspannen der Betriebsbremse und der Feststellbremse kennliniengesteuert erfolgt.

3. Verfahren nach wenigstens einem der vorhergehenden Ansprüche, **dadurch gekennzeichnet, dass** für den Fall, dass die Bremswirkung der Feststellbremse nicht ausreicht, um das Fahrzeug am Losrollen zu hindern, die Betriebsbremse erneut zugespannt wird und ein akustisches und/oder optisches Warnsignal erzeugt wird.

4. Verfahren nach wenigstens einem der vorhergehenden Ansprüche, **dadurch gekennzeichnet, dass** bei der vor dem Stillstand des Fahrzeugs stattfindenden Bremsung mit der Betriebsbremse eine zum Gebremsthalten des Fahrzeugs notwendige Betriebsbremskraft errechnet und mit der von der Feststellbremse maximal erzeugbaren Feststellbremskraft verglichen wird, wobei für den Fall, dass die Betriebsbremskraft größer als die Feststellbremskraft ist, ein akustisches und/oder optisches Warnsignal erzeugt wird.

5. Verfahren nach wenigstens einem der vorhergehenden Ansprüche, **dadurch gekennzeichnet, dass** die ab dem Zeitpunkt des Stillstands des Fahrzeugs stattfindende Bremsung mit der Betriebsbremse mit einer Betriebsbremskraft durchgeführt wird, welche höchstens so groß wie die von der Feststellbremse maximal erzeugbare Feststellbremskraft ist.

6. Verfahren nach wenigstens einem der vorhergehenden Ansprüche, **dadurch gekennzeichnet, dass** nach dem Lösen der Betriebsbremse und dem Zuspannen der Feststellbremse zumindest ein Teil der Bremssteuerung abgeschaltet wird.

7. Verfahren nach wenigstens einem der vorhergehenden Ansprüche, **dadurch gekennzeichnet, dass** für die Fälle b), c) und d) von Anspruch 1 nachfolgende Bremsungen keine automatischen Bremsungen sind.

8. Verfahren nach Anspruch 1, **dadurch gekennzeichnet, dass** durch eine Betätigung des Bedienelements der Feststellbremse die Betriebsbremse zugespannt wird, um den Zustand herzustellen, in welchem sich das Fahrzeug durch die zugespannte Betriebsbremse im Stillstand befindet und dass das Lösen der Betriebsbremse und das Zuspannen der Feststellbremse nach dem Abschalten des Fahrzeugantriebs erfolgt.

## Claims

1. Method for automatic braking, without any active braking operation by the driver, of a vehicle equipped with an electronically controlled braking device which has a service brake, which can be operated electrically and to which a service braking pressure (p_{B}) can be applied, and a parking brake, which can be operated electrically and to which a parking braking pressure (p_{F}) can be applied, wherein, starting from a state in which the vehicle is stationary as a result of the service brake being applied, the service brake is released and the parking brake is applied as a function of a release criterion, wherein application of the parking brake in response to the release criterion is initiated without any delay, and the release criterion is at least one of the following criteria:
a) the vehicle drive is switched off;
b) the service braking pressure (p_{B}) falls to a critical braking pressure limit value;
c) the service brake is not operable;
d) the vehicle power supply system voltage falls to a critical voltage limit value;
e) the parking brake cannot be applied manually because of a defect;
f) the operation of a control element for application of the parking brake,
**characterized in that**
- the service brake is furthermore applied, or the service braking pressure (p_{B}) remains at its starting level, until the spring energy storage braking pressure (p_{F}) has fallen to a lower limit value (pₗᵢₘᵢₜ) and the process of releasing the service brake by lowering the service braking pressure (p_{B}) is initiated only when this lower limit pressure (pₗᵢₘᵢₜ) has been reached by the spring energy storage braking pressure (p_{F}) and the parking brake is applying a certain minimum braking effect (zₗᵢₘᵢₜ), and **in that**
- starting from a state in which the parking brake is applied with the vehicle drive switched off and the service brake is released, the service brake is automatically applied, and the parking brake is automatically released, when the vehicle drive is started, wherein the process of releasing the parking brake and reducing the spring energy storage braking pressure (p_{F}) is initiated only when the service braking pressure (p_{B}) has reached a minimum service braking pressure (pₗᵢₘᵢₜ) and the service brake is applying a certain minimum braking effect (zₗᵢₘᵢₜ).

2. Method according to Claim 1, **characterized in that** the opposing release and application of the service brake and of the parking brake are controlled by a characteristic.

3. Method according to at least one of the preceding claims, **characterized in that**, in the situation where the braking effect of the parking brake is not sufficient to prevent the vehicle from rolling freely, the service brake is applied once again, and an audible and/or visual warning signal is produced.

4. Method according to at least one of the preceding claims, **characterized in that**, when the service brake is used for braking before the vehicle is stationary, a service braking force which is required to stop the vehicle by braking is calculated and is compared with the maximum parking braking force which can be produced by the parking brake, with an audible and/or visual warning signal being produced if the service braking force is greater than the parking braking force.

5. Method according to at least one of the preceding claims, **characterized in that** the service brake is applied for braking after the time at which the vehicle becomes stationary, with a service braking force which is at most as great as the maximum parking braking force which can be produced by the parking brake.

6. Method according to at least one of the preceding claims, **characterized in that**, once the service brake has been released and the parking brake has been applied, at least a portion of the braking control is switched off.

7. Method according to at least one of the preceding claims, **characterized in that**, in the situations b), c) and d) in Claim 1, subsequent braking operations are not automatic braking operations.

8. Method according to Claim 1, **characterized in that** operation of the control element for the parking brake results in the service brake being applied in order to produce the state in which the vehicle is kept stationary by the applied service brake, and **in that** the service brake is released and the parking brake is applied once the vehicle drive has been switched off.

## Revendications

1. Procédé de freinage automatique d'un véhicule équipé d'un dispositif de freinage à régulation électronique, qui est réalisé sans actionnement de frein actif par le conducteur et qui comprend un frein de service, apte à être commandé électriquement et sollicité par une pression de freinage de service (p_{B}), ainsi qu'un frein de stationnement, apte à être commandé électriquement et sollicité par une pression de freinage de stationnement (p_{F}), dans lequel, à partir d'un état dans lequel le véhicule est stationné par serrage du frein de service, le frein de service est desserré et le frein de stationnement est serré en fonction d'un critère de déclenchement, au lancement du serrage du frein de stationnement en réponse audit critère de déclenchement se faisant sans retard et audit critère de déclenchement étant au moins un des critères suivants :
a) le système de propulsion du véhicule est désactivé ;
b) la pression de freinage de service (p_{B}) descend jusqu'à une valeur limite critique de pression de freinage ;
c) le frein de service n'est pas opérationnel ;
d) la tension de bord du véhicule descend jusqu'à une valeur limite critique de tension ;
e) le serrage du frein de stationnement à main n'est pas possible en raison d'un défaut ;
f) l'actionnement d'un élément de commande afin de serrer le frein de stationnement,
**caractérisé en ce**
- **que** le frein de service continue à rester serré ou la pression de freinage de service (p_{B}) reste à son niveau de départ jusqu'à ce que la pression de freinage par ressort accumulateur (p_{F}) est réduite jusqu'à une valeur limite inférieure (p_{grenz}) est le desserrage du frein de service n'est lancé par la baisse de la pression de freinage de service (p_{B}) qu'à un point de temps, auquel la pression de freinage par ressort accumulateur (p_{B}) a atteint cette pression limite inférieure (p_{grenz}) et le frein de stationnement applique un effet de freinage minimal défini (Z_{grenz}), et
- **qu'**à partir d'un état, dans lequel, au système de propulsion du véhicule étant désactivé, le frein de stationnement est serré et le frein de service est desserré, le frein de service est automatiquement serré et le frein de stationnement est automatiquement desserré quand le système de propulsion du véhicule est démarré, à un desserrage du frein de stationnement et à une baisse de la pression de freinage par ressort accumulateur (p_{F}) n'étant lancé qu'après la pression de freinage de service (p_{B}) a atteint une valeur de pression de freinage de service minimale (p_{grenz}) et le frein de service applique un effet de freinage minimal défini (Z_{grenz}).

2. Procédé selon la revendication 1, **caractérisé en ce que** le desserrage et le serrage à l'inverse du frein de service et du frein de stationnement se fait sous commande par courbes caractéristiques.

3. Procédé selon au moins une quelconque des revendications précédentes, **caractérisé en ce qu'**au cas, où l'effet de freinage du frein de stationnement ne suffit pas afin d'empêcher le véhicule de se mettre à rouler, le frein de service est serré de nouveau et un signal d'avertissement sonore et/ou optique est engendré.

4. Procédé selon au moins une quelconque des revendications précédentes, **caractérisé en ce qu'**au cas de freinage moyennant le frein de service, qui se fait avant l'arrêt du véhicule, un effort de freinage de service est calculé, qui est nécessaire afin de maintenir le véhicule en état freiné, et est comparé contre l'effort de freinage de stationnement, qu'on peut engendrer au maximum moyennant le frein de stationnement, à génération d'un signal d'avertissement sonore et/ou optique au cas, que l'effort de freinage de service est plus fort que l'effort de freinage de stationnement.

5. Procédé selon au moins une quelconque des revendications précédentes, **caractérisé en ce que** le freinage réalisé moyennant le frein de service à partir du point de temps d'arrêt du véhicule se fait à un effort de freinage de service qui est égal, au maximum, à l'effort de freinage de stationnement, qui peut être engendré au maximum par le frein de stationnement.

6. Procédé selon au moins une quelconque des revendications précédentes, **caractérisé en ce qu'**au moins une partie de la commande de freinage est désactivé après le desserrage du frein de service et le serrage du frein de stationnement.

7. Procédé selon au moins une quelconque des revendications précédentes, **caractérisé en ce que** les cycles de freinage suivants pour les cas b), c) et d) de la revendication 1 ne sont pas des cycles de freinage automatiques.

8. Procédé selon la revendication 1, **caractérisé en ce que** le frein de service est serré par actionnement dudit élément de commande du frein de stationnement, afin de créer l'état, dans lequel le véhicule est arrêté par serrage du frein de service, et **en ce qu'**on desserre le frein de service et serre le frein de stationnement après la désactivation du système de propulsion du véhicule.
